# EUROPEAN PATENT SPECIFICATION

(11) **EP 1 569 121 B1**
(45) Date of publication and mention of the grant of the patent: **11.07.2007**
(21) Application number: 04251092.5
(22) Date of filing: 26.02.2004
(51) Int. Cl.: G06F 11/36, G06F 9/52

(54) **Method and system for detecting potential deadlocks in computer programs**
Verfahren und System zur Erkennung von möglichen Blockierungen in Computerprogrammen
Système et méthode pour la détection d'interblocages potentiels dans des programmes informatiques

(43) Date of publication of application: 31.08.2005
(73) Proprietor: Research In Motion Limited, Waterloo, Ontario N2L 3W8 (CA)
(72) Inventor: Dunk, Craig, Guelph Ontario N1L 1P2 (CA); Dahms, John, Waterloo Ontario N2K 2N1 (CA)
(74) Representative: Rickard, David John

(56) References cited:
- EP-A- 0 864 975
- GADE K: "Portable Data Race and Deadlock Detector"[Online] 6 July 2004 (2004-07-06), XP002287577 Retrieved from the Internet: URL:www.scs.cs.nyu.edu/G22.3250/proj/datar ace.ps> [retrieved on 2004-07-06]

## Description

The present invention relates to computer programming and, in particular, to a method and system for the detection of potential deadlocks in computer programs.

Multithreaded processing of computer programs has become increasingly common as more popular operating systems provide support for multithreaded processing. A thread is a portion of a computer program that may be logically executed in parallel with another portion of the program. Multithreading allows for the effective utilization of processor resources when executing a computer program by having a separate process utilize clock cycles that would otherwise go unused by a concurrently executing process. Operating systems that support multithreaded processing typically include a scheduler for coordinating the processing of multiple threads.

A computer system executing a multithreaded computer program often includes shared resources, such as program objects, to which more than one thread will require access. To address this conflict, many shared resources are capable of being locked by a thread, preventing other threads from accessing the resource until it is unlocked. Such a shared resource is sometimes referred to as a mutual exclusion object ("mutex").

A problem that arises with multithreaded computer programs is that two or more threads may include a certain sequence of locks and unlocks upon shared resources that, if executed in a particular sequence relative to each other, could result in a deadlock. The scheduler typically ensures only the order of events within each thread, but not the timing of particular events as between threads. Accordingly, the timing of the processing of two threads relative to each other can result in "freeze" or "lock up" behavior, which may only be exhibited intermittently.

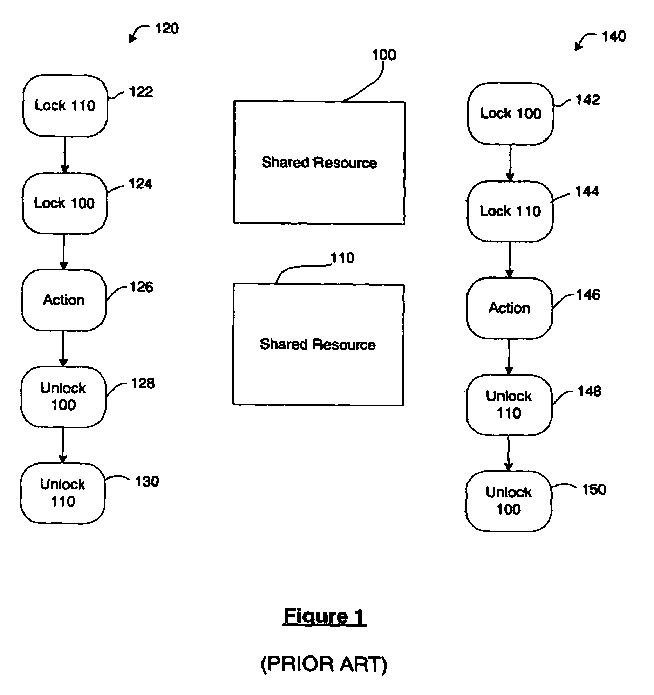

Reference is made to Figure 1 which shows a diagram illustrating a potential deadlock Situation involving two threads of a computer program. A first thread 120 and a second thread 140 both require access to a first resource 100 and a second resource 110. The sequence of steps in the first thread 120 includes a first step 122 of locking the second resource 110 and a second step 124 of locking the first resource 100. The second thread 140 includes steps in the opposite sequence: a first step 142 locks the first resource 100 and a second step 144 locks the second resource 110. Both threads have subsequent steps for performing some processing action 126, 146, and unlocking the shared resources 128, 130, 148, and 150.
It will be appreciated that the threads 120, 140 may be executed in many cases without encountering any problems; however, if the threads 120, 140 are executed such that the two first steps 122, 142 in each thread 120, 140 are executed one after the other, a deadlock situation will result. For example, if the first thread 120 locks the second resource 110 and then the second thread 140 locks the first resource 100, neither thread 120, 140 will be capable of advancing to the second steps 124, 144 since neither can ever gain access to the other shared resource.
The conventional tool for identifying deadlocks in computer programs is a graphical analysis of the source code to generate a "resource dependency graph". If the graph is cyclical, a potential deadlock is identified. This technique is usually performed by hand, and is therefore time-consuming and complicated.
Potential deadlocks are difficult to identify during run-time execution of the computer program since the errors only arise intermittently. Accordingly, a brute force work-around that is commonly employed is to use a timeout value on the shared resource lock. This solution fails to actually identify and fix the deadlock problem.
A similar problem of deadlocking may be encountered when a wait-trigger event occurs relative to a lock event, wherein one thread has locked a resource and is stalled at a wait function awaiting a trigger event while a second thread needs access to the resource before the trigger event can occur, thereby freezing operation of both threads.
EP0864975 discloses an automated method of identifying deadlock conditions by monitoring the operation of a multithreaded computer program and maintaining a lockset (230) for each thread of the multithreaded computer program. Whenever a lock is acquired, the lock is added to the lockset (230) associated with that thread. Locks which are released are deleted from the set. The monitor also records all lock acquisitions for each thread in a global lock log (300). When a lock is acquired by a thread, the monitor records lock pairs in the lock log (300). The ordered lock pairs correspond to the currently requested lock and one previous and unreleased lock. If a pair has already been recorded in the lock log, a duplicate pair is not added. In order to identify a potential deadlock situation, it is necessary to perform a topological sort on the lock pairs contained in the lock log to indicate whether a cycle is present which is evidence of a potential deadlock situation.
An improved automated method of detecting potential deadlocks in a computer program that addresses aforementioned shortcomings would be advantageous.

### General

The present invention provides a method of detecting a potential deadlock during execution of a computer program that identifies the occurrence of complementary inverse lock sequences on different threads. The method records sequenced requests for access to resources and assesses whether previous sequences of requests reveal a potential deadlock situation.
In one aspect, the present invention provides a method of detecting potential deadlocks in a multithreaded computer program during execution of said computer program on a computer system, said computer system having a plurality of resources and said computer program comprising a plurality of requests for access to one or more of said resources, said computer system comprising a stack or list of previously requested and unreleased resources, the method comprising the steps of: receiving one of said requests for access to a selected resource; reading a stack or list comprising previously requested and unreleased resources; recording said previously requested and unreleased resources as a lock sequence in a data element associated with said selected resource; reading data elements associated with said previously requested and unreleased resources, said data elements comprising prior lock sequences; and generating a deadlock indicator if said selected resource appears in one of said data elements associated with said previously requested and unreleased resources.
In another aspect the present invention provides a computer system for detecting a potential deadlock in a multithreaded computer program executing upon said computer system, said computer system having a plurality of resources, wherein said computer program comprises a plurality of requests for access to one or more of said resources, the computer system comprising: a stack or list of previously requested and unreleased resources; means for receiving one of said requests for access to a selected resource; means for reading said stack or list; means for recording said list of previously requested and unreleased resources as a lock sequence in a data element associated with said selected resource; means for reading data elements associated with said previously requested and unreleased resources, said data elements comprising prior lock sequences; and means for generating a deadlock indicator if said selected resource appears in one of said data elements associated with said previously requested and unreleased resources.
Other aspects and features of the present invention will be apparent to those of ordinary skill in the art from a review of the following detailed description when considered in conjunction with the drawings.

### BRIEF DESCRIPTION OF THE DRAWINGS

Reference will now be made, by way of example, to the accompanying drawings which show an embodiment of the present invention, and in which:
Figure 1 shows a diagram illustrating an example of a potential deadlock situation involving two threads of a software program;
Figure 2 shows a flowchart depicting a method for detecting potential deadlocks according to the present invention;
Figures 3a to 3f show, in block diagram form, an illustration by way of an example of the steps taken by an embodiment of the present invention; and
Figure 4 shows a flowchart depicting another method for detecting potential deadlocks according to the present invention.
Similar reference numerals are used in different figures to denote similar components.

### DESCRIPTION OF PREFERRED EMBODIMENTS

The following description of one or more specific embodiments of the invention does not limit the implementation of the invention to any particular computer language or computer operating system. Any limitations presented that result from a particular computer language or a particular operating system are not intended as limitations of the present invention.

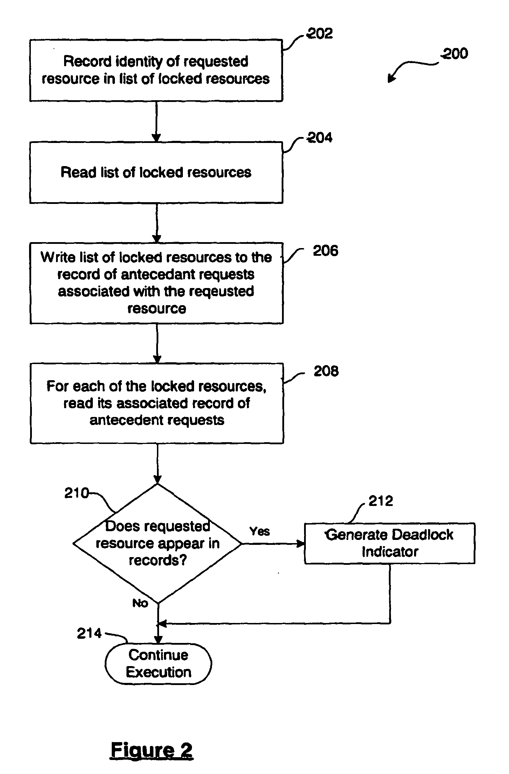

Reference is first made to Figure 2, which shows a flowchart of a method 200 for detecting potential deadlocks according to the present invention.

If the author of an implementation of the method 200 has editorial control of the operating system, such as in the case of a system based upon open source code, existing functions for locking shared resources may be modified so as to incorporate additional steps to customize the function without renaming the function. For example, in a Java environment, the Java synchronize statement is typically employed to lock a shared resource. If the developer has access to the code for a Java Virtual Machine (JVM), the method 200 may be implemented within the JVM to modify the synchronize statement so as to perform the steps of the method 200 in addition to the steps for locking the shared resource that would normally be taken. This provides the implementation with transparency, allowing subsequent developers to incorporate the method 200 without requiring knowledge of a custom function.

In other computer environments, where the author does not have control of the existing shared resource functions, it may not be possible to customize the existing functions. In these cases, the method 200 may be implemented through "wrapping" the existing lock function with a new deadlock detection lock function that implements the method 200 and calls the existing predefined lock function. An example of such an environment is one based upon use of the Microsoft Windows^{™} operating system by developers other than the Microsoft Corporation itself.

The method 200 operates during run-time execution of a computer program. It is triggered when a thread of the computer program requests access to a shared resource. When the computer program requests access to a shared resource a lock function is called (either the customized lock function or the "wrapped" lock function).

The method 200 begins in step 202 wherein the identity of the requested resource is recorded in a list of currently locked resources. Typically, the operating system for the computer system will maintain a stack or list of locked resources. For example, the JVM maintains a list of which resources have been locked. When the JVM receives a request for a resource it consults this list to determine whether or not access to the resource should be granted to the requester based upon whether or not the resource is already locked. This step 202 is a step which would be taken by the conventional lock function to lock the requested resource.

If the method 200 is implemented in a 'wrapper' function, it may be necessary to maintain a separate data structure identifying which resources have been locked.

In step 204, the stack or list of locked resources is read to determine which resources were locked and have not yet been unlocked prior to the current resource request. At step 206, this list of prior locked and unreleased resources is written to a data element or structure associated with the requested resource. In other words, for each shared resource there is an associated persistent data element that records which other shared resources have been locked and not released each time an attempt is made to lock the resource. This results in a set of records of sequential lock operations contained in the computer program.

In one embodiment, implemented in a Java environment, the associated data structure is the requested object itself. Other embodiments include a separate data object associated with each shared resource.

The method 200 then continues at step 208 wherein, for each currently locked and unreleased resource, its associated record of antecedent requests, *i.e.* previous sequential lock operations, is read. The associated record for each locked resource may contain only antecedent requests made during processing of the current thread, or it may contain multiple sequences reflecting multiple requests to access the resource made by multiple threads.

In step 210, an assessment is made as to whether the requested resource appears in the associated records for currently locked and unreleased resources. If it does, then it indicates a potential cycle, which could result in a deadlock situation. Accordingly, if the requested resource is identified in the associated records of locked and unreleased resources, then at step 212 a potential deadlock indicator is generated. At step 214, execution of the computer program is continued.

The generation of a potential deadlock indicator may include writing the potential deadlock to a log file or otherwise identifying the portion of the computer program code that resulted in the potential deadlock. It may also include displaying an error message and it may include halting execution of the computer program. Other mechanisms for alerting the computer program developer to the identification of a potential deadlock will be apparent to those of ordinary skill in the art.

It will be appreciated that the method 200 according to the present invention attempts to detect potential resource dependency cycles in the computer program during run-time execution of the program by recording partial resource lock sequences for each requested resource. With each resource request, prior lock sequences for resources already locked and not released are analyzed to ensure that the requested resource does not appear in a prior lock sequence. If it does, then a potential deadlock scenario is identified.

In this manner, the present invention identifies when the computer program performs a sequential lock of, for example, (A ... B), and it assesses whether or not the sequence (B ... A) has previously been encountered on another thread. If it has, then there is the potential for a deadlock to occur.

It will be understood that many of the steps of the method 200 may be performed in an alternative order without affecting the resulting determination as to whether a potential deadlock exists.

It will also be appreciated that the method 200 according to the present invention does not require that an actual deadlock occur in order to identify a potential deadlock.

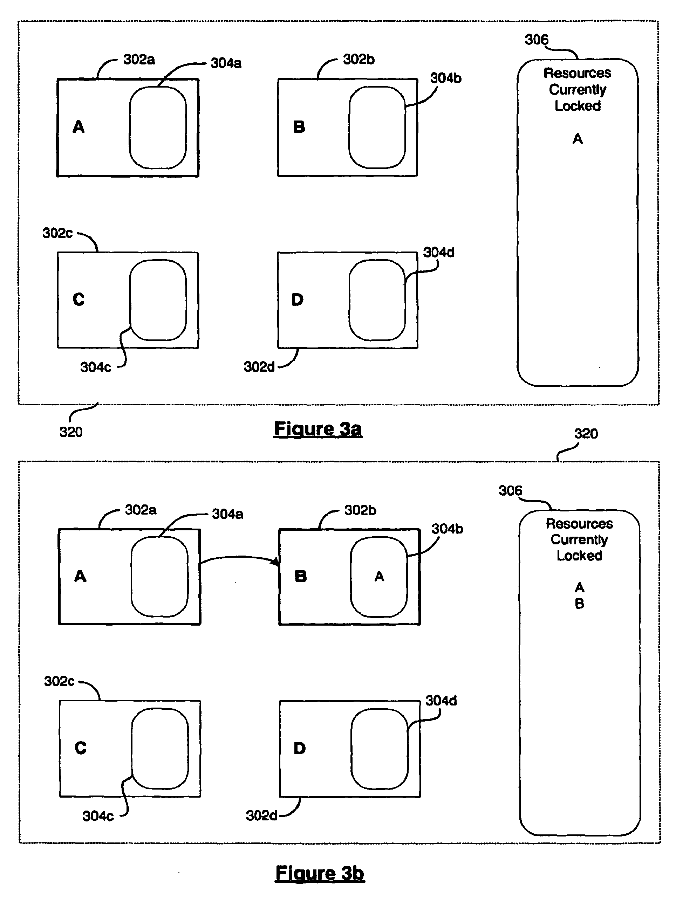

Reference is now made to Figures 3a through 3f, which show, in block diagram form, an illustration by way of an example of the steps taken by an embodiment of the present invention.

In the example shown in Figures 3a through 3f, a computer system 320 includes four shared resources A, B, C, and D, designated with reference numerals 302a, 302b, 302c, and 302d, respectively. Each of the shared resources 302 has an associated data element 304 for storing a list of antecedent lock sequences. In one embodiment, the data elements 304 are incorporated within the associated resource 302.

Also present on the computer system 320 is a list 306 of resources currently locked. The list 306 may be maintained and controlled by the operating system of the computer system 320 or it may be a data structure or object created and stored on computer system 320 by a module or function implementing the method 200 (Fig. 2) according to the present invention.

As shown in Figure 3a, a first thread (not shown) has locked resource A 302a, as indicated by the heavy outline. Accordingly, the identity of resource A appears in the list 306 of locked resources.

Next, as shown in Figure 3b, the first thread locks resource B 302b. The identity of resource B is added to the list 306 of locked resources. Resource A 302a remains locked. Moreover, the identity of resource A is recorded in the data element 304b associated with resource B 302b, since the list 306 indicates that resource A 302a was locked and not yet unlocked when the first thread requested access to resource B 302b.

Reference is now made to Figure 3c, which shows that the first thread then locks resource D 302d. Accordingly, the identity of resource D is added to the list 306 of locked resources and the identities of resources A and B 302a, 302b are added to the data element 304d associated with resource D 302d. This evidences the fact that resource D 302d was requested by the first thread at a time when the first thread had already locked resources A and B 302a, 302b.

It is now supposed that the first thread unlocks the locked resources A, B, and D 302a, 302b, and 302d. At some point in the computer program execution, a second thread (not shown) locks resource D 302d, as shown in Figure 3d. The lock sequence data, AB, from the processing of the first thread continues to exist in the data element 304d associated with resource D 302d. The list 306 of locked resources is updated to record the fact that resource D 302d has been locked.

As shown in Figure 3e, the second thread then locks resource C 302c. The identity of resource C 302c is added to the list 306 of locked resources and the fact that resource D 302d has already been locked by the second thread is recorded in the data element 302c associated with resource C 302c.

Resource D 302d was on the list 306 of currently locked resources prior to the request to lock resource C 302c, so the contents of the data element 304d associated with the currently locked resource D 302d are read to determine whether or not a previous thread has performed a locking sequence that locked resource C 302c prior to locking resource D 302d. The associated data element 304d identifies a lock sequence of AB. Because resource C 302c does not appear in the data element 304d, thus far the lock sequences implemented by the computer program are acyclical, indicating that no potential deadlock exists.

Reference is now made to Figure 3f, which illustrates that the second thread next locks resource B 302b. Accordingly, the identity of resource B 302b is added to the list 306 of locked resources. The currently locked resources, resource D 302d and resource C 302c, are added to the data element 304b associated with resource B 302b. Thus the data element 304b for resource B 302b now includes two lock sequence records: one corresponding to the first thread, and one corresponding to the second thread.

The data elements 304c and 304d associated with the previously locked and not yet unlocked resources C and D 302c, 302d are then read to assess whether the requested resource, resource B 302b, appears in prior lock sequences. It will be seen that the data element 304c corresponding to resource C 302c contains only the identity of resource D 302d; however, the data element 304d corresponding to resource D 302d contains the lock sequence AB. Therefore, it is apparent that resource B 302b was locked prior to resource D 302d by a different thread, whereas the present thread has locked resource D 302d prior to resource B 302b. Accordingly, a potential deadlock has been identified. In accordance with step 212 (Fig. 2) of the method 200 (Fig. 2), an appropriate deadlock indicator is generated.

Although the method 200 as illustrated by the example shown in Figure 3 records the complete lock sequence in the data element 304 associated with a requested resource 302, it will be appreciated that in another embodiment only the identity of the immediately preceding locked resource could be recorded in the associated data element 304. In this embodiment, the invention recursively steps back through the data elements 304 of preceding locked resources to trace the lock sequence and identify any potential deadlocks. Based upon the foregoing description, other methods and techniques for tracking the occurrence of complementary inverse lock sequences on different threads will be apparent to those of ordinary skill in the art.

The present invention is not limited to the detection of deadlocks resulting from the use of lock functions for accessing mutually exclusive resources. The invention may also be used to detect potential deadlocks related to "event" structures. An event includes a function of waiting upon an event and a complementary function of triggering the event. The wait function is analogous to a lock and the trigger function is analogous to an unlock. An event construct is similar to a lock construct, except whereas a lock-unlock pair occurs within a single thread, a wait-trigger pair occurs across separate threads.

The potential deadlock effect of interacting events and locks across multiple threads is the same as described above for locks alone. Consider the following example threads:

| THREAD 1 | THREAD 2 |
|---|---|
| Lock Mutex A | Lock Mutex A |
| Wait Event B | Trigger Event B |
| Unlock Mutex A | Unlock Mutex A |

In the above example, if thread 1 is executed first then Mutex A will be locked and the thread will await the triggering of Event B. This trigger can never occur because thread 2 cannot access the locked Mutex A. Accordingly, a deadlock will result.
Reference is now made to Figure 4, which shows a flowchart depicting another method 400 for detecting potential deadlocks according to the present invention. The method 400 of detecting a potential deadlock situation involving a wait-trigger event includes a first step 402 of receiving a wait request. The wait request has a corresponding trigger event on another thread. The method 400 then includes a second step 404 of assessing whether or not the active thread has any resources that have been requested and are unreleased when the wait request is encountered. This step 404 may be performed by consulting the stack to determine if there are any currently locked resources.
If there are locked and unreleased resources when the wait request is encountered, then there is the potential for a deadlock. Accordingly, in the next step 406, a deadlock indicator is generated. If there are no locked and unreleased resources, then the program continues execution 408.
The method 400 may be rendered more sophisticated by recording the resource that was locked when the wait request was encountered and then later assessing whether or not the same resource could be locked during the trigger event.
Those of ordinary skill in the art will appreciate that the foregoing description is not limited to lock functions, and a lock-unlock sequence may be generally considered a request and release sequence in relation to a resource.
The above discussed embodiments are considered to be illustrative and not restrictive, the scope of the invention being indicated by the appended claims rather than the foregoing description.

## Claims

1. A method of detecting potential deadlocks in a multithreaded computer program during execution of said computer program on a computer system, said computer system having a plurality of resources (302) and said computer program comprising a plurality of requests for access to one or more of said resources (302), said computer system comprising a stack or list (306) of previously requested and unreleased resources, the method comprising the steps of:
receiving one of said requests for access to a selected resource;
reading said stack or list (306) comprising previously requested and unreleased resources;
recording said previously requested and unreleased resources as a lock sequence in a data element (304) associated with said selected resource;
reading data elements (304) associated with said previously requested and unreleased resources, said data elements (304) comprising prior lock sequences; and
generating a deadlock indicator if said selected resource appears in one of said data elements (304) associated with said previously requested and unreleased resources.

2. The method claimed in claim 1, wherein said requests for access comprise a request to lock a resource, and said previously requested and unreleased resources comprise currently locked resources.

3. The method claimed in any one of the preceding claims, further comprising a step of recording said selected resource in said stack or list (306).

4. The method claimed in any of the preceding claims, wherein said request for access to said selected resource is generated by a thread of said computer program and said previously requested and unreleased resources comprise resources requested by said thread and not released prior to said request for said selected resource.

5. The method claimed in claim 4, wherein at least one of said data elements (304) comprises a request sequence, said request sequence comprising resources requested by a previous thread of said computer program, and wherein said step of generating comprises generating said potential deadlock indicator if said resources requested by said previous thread comprise said selected resource.

6. The method claimed in any one of the preceding claims, wherein each of said resources (302) incorporates said associated data element (304).

7. A computer system for detecting a potential deadlock in a multithreaded computer program executing upon said computer system, said computer system having a plurality of resources (302), wherein said computer program comprises a plurality of requests for access to one or more of said resources (302), the computer system comprising:
a stack or list (306) of previously requested and unreleased resources;
means for receiving one of said requests for access to a selected resource;
means for reading said stack or list (306);
means for recording said stack or list (306) of previously requested and unreleased resources as a lock sequence in a data element (304) associated with said selected resource;
means for reading data elements (304) associated with said previously requested and unreleased resources, said data elements (304) comprising prior lock sequences; and
means for generating a deadlock indicator if said selected resource appears in one of said data elements associated with said previously requested and unreleased resources.

8. The computer system claimed in claim 7, wherein said requests for access comprise a request to lock a resource, and said previously requested and unreleased resources comprise currently locked resources.

9. The computer system claimed in claim 8, wherein said means for recording further comprises means for recording said selected resource in said stack or list (306).

10. The computer system claimed in any of claims 7 to 9, wherein said request for access to said selected resource is generated by a thread of said computer program and said previously requested and unreleased resources comprise resources requested by said thread and not released prior to said request for said selected resource.

11. The computer system claimed in claim 10, wherein at least one of said data elements (304) comprises a request sequence, said request sequence comprising resources requested by a previous thread of said computer program, and wherein said means for generating comprise means for generating said potential deadlock indicator if said resources requested by said previous thread comprise said selected resource.

12. The computer system claimed in any of claims 7 to 11, wherein each of said resources incorporates said associated data element (304).

13. A computer software product having a computer-readable medium containing computer executable code means for detecting potential deadlocks in a multithreaded computer program during execution of said computer program on the computer system of any of claims 7 to 12, said code means being executable to implement the method of any of claims 1 to 6.

## Patentansprüche

1. Ein Verfahren zur Erkennung möglicher Deadlocks in einem Computerprogramm mit Multithread-Fähigkeit während das Computerprogramm auf einem Computersystem ausgeführt wird, wobei das Computersystem eine Vielzahl von Ressourcen (302) und eine Viehzahl von Zugriffsanforderungen an eine oder mehrere der Ressourcen (302) aufweist, wobei das Computersystem einen Stapel oder eine Liste(306) von vorher angeforderten und nicht freigegebenen Ressourcen umfasst, und das Verfahren die folgenden Schritte umfasst:
Empfang einer der Zugriffsanforderungen an eine der selektiertenRessourcen;
Lesen des Stapels oder der Liste (306) von vorher angeforderten und nicht freigegebenen Ressourcen,
Aufzeichnung der vorher angeforderten und nicht freigegeben Ressourcen als eine Sperrsequenz in einem Datenelement (304), das mit den ausgewählten Ressourcen assoziiert ist;
Lesen der Datenelemente (304), die mit den vorher angeforderten und nicht freigegebenen Ressourcen assoziiert sind, wobei die Datenelemente(304) frühere Sperrsequenzen umfassen; und
Erzeugung eines Deadlock-Indikators, wenn die ausgewählte Ressource in einem der Datenelemente (304), die mit den vorher angeforderten und nicht freigegebenen Ressourcen assoziiert sind, auftritt.

2. Das Verfahren gemäß Anspruch 1, wobei die Zugriffsanforderungen eine Anforderung zur Ressourcensperrung umfasst, und die vorher angeforderten und nicht freigegebenen Ressourcen derzeit gesperrte Ressourcen umfassen.

3. Das Verfahren gemäß einem der vorherigen Ansprüche, weiter umfassend den Schritt des Aufzeichnens der selektierten Ressource in dem Stapel oder der Liste (306).

4. Das Verfahren gemäß einem der vorherigen Ansprüche, wobei die Zugriffsanforderung an die selektierten Ressource durch einen Thread des Computerprogramms erzeugt wird, und die vorher angeforderten und nicht freigegebenen Ressourcen Ressourcen umfassen, die von dem Thread angefordert wurden und die vor der Anforderung der Ressource nicht freigegeben wurden

5. Das Verfahren gemäß Anspruch 4, wobei mindestens eins der Datenelemente (304) eine Anforderungssequenz enthält, wobei die Anforderungssequenz Ressourcen umfasst, die von einem vorherigen Thread des Computerprogramms angefordert wurden, und wobei der Schritt des Erzeugens die Erzeugung des potenziellen Deadlock-Indikators für den Fall, dass die von einem früheren Thread angeforderten Ressourcen die selektierte Ressource beinhalten, umfasst.

6. Das Verfahren gemäß eines jedem der vorherigen Ansprüche, wobei jede der Ressourcen (302) das assoziierte Datenelement (304) einschliesst.

7. Ein Computersystem zur Erkennung potenzieller Deadlocks in einem Computerprogramm mit Multithread-Fähigkeit während es auf einem Computersystem ausgeführt wird, wobei das Computersystem eine Vielzahl von Ressourcen (302) und eine Viehzahl von Zugriffsanforderungen an eine oder mehrere der Ressourcen (302) aufweist, und das Computersystem Folgendes umfasst:
Einen Stapel oder eine Liste von vorher angeforderten und nicht freigegebenen Ressourcen;
Mittel zum Empfangen einer der Anforderungen nach Zugriff auf eine selektierte Ressource
Mittel zum Lesen des Stapels oder der Liste (306);
Mittel zum Aufzeichnen des Stapels oder der Liste (306) voher angeforderter und nicht freigegebener Ressourcen als eine Sperrsequenz in einem Datenelement (304), die mit der selektierten Ressource assoziiert ist,
Mittel zum Lesen von Datenelementen (304), die mit vorher angeforderten und nicht freigegebenen Ressourcen assoziiert sind, wobei die Datenelemente (304) vorherige Sperrsequenzen umfassen; und
Mittel zur Erzeugung eines Deadlock-Indikators für den Fall, dass die selektierte Ressource in einem der Datenelemente, das mit der selektierten Ressource assoziiert ist, auftritt.

8. Das Computesystem gemäß Anspruch 7, wobei die Zugriffsanforderungen eine Anforderung zur Ressourcensperrung beinhalten, und wobei die vorher angeforderten und nicht freigegebenen Ressourcen derzeit gesperrte Ressourcen umfassen.

9. Das Computersystem gemäß Anspruch 8, wobei die Aufzeichnungsmittel weiter Mittel zum Aufzeichnen der selektierten Ressource in dem Stapel oder der Liste (306) umfassen

10. Das Computersystem gemäß eines jedem der Ansprüche 7 bis 9, wobei die Zugriffsanforderung nach der selektierten Ressource durch einen Thread des Computerprogramms erzeugt wird, und die vorher angeforderten und nicht freigegebenen Ressourcen Ressourcen beinhalten, die von diesem Thread angefordert wurden und nicht vor der Anforderung nach der selektierten Ressource freigegeben wurden

11. Das Computersystem gemäß Anspruch 10, wobei mindestens eins der Datenelemente (304) eine Anforderungssequenz enthält, wobei die Anforderungssequenz Ressourcen, die von einem frührenen Thread des Computerprogramms angefordert wurden, enthält, und wobei die Erzeugungsmittel Mittel beinhalten zur Erzeugung des potenziellen Deadlock-Indikators für den Fall, dass die von dem früheren Thread angeforderten selektierten Ressourcen die selektierte Ressource umfasst.

12. Das Computersystem gemäß eines jedem der Ansprüche 7 bis 11, wobei jede der Ressourcen das assoziierte Datenelement (304) beeinhaltet.

13. Ein Computersoftwareprodukt, das ein computerlesbares Mittel mit computerausführbaren Codemittel umfasst zum Erkennenvon potenziellen Deadlocks in einem Computerprogramm mit Multithread-Fähigkeit während der Ausführung des Computerprogramms auf dem Computersystem gemäß eines jedem der Ansprüche 7 bis 12, wobei die Codemittel insofern ausführbar sind, dass das Verfahren gemäß einem der Ansprüche 1 bis 6 umgesetzt werden kann.

## Revendications

1. Procédé de détection des interblocages potentiels dans un programme informatique multifil pendant l'exécution dudit programme informatique sur un système informatique, ledit système informatique comprenant une pluralité de ressources (302) et ledit programme informatique comprenant une pluralité de demandes d'accès à une ou plusieurs desdites ressources (302), ledit système informatique comprenant une pile ou liste (306) de ressources préalablement demandées et non accordées, le procédé comprenant les étapes consistant à :
recevoir une desdites demandes d'accès à une ressource sélectionnée ;
lire ladite pile ou liste (306) comprenant les ressources préalablement demandées et non accordées ;
enregistrer lesdites ressources préalablement demandées et non accordées en tant que séquence de blocage dans un élément de données (304) associé à ladite ressource sélectionnée ;
lire les éléments de données (304) associés auxdites ressources préalablement demandées et non accordées, lesdits éléments de données (304) comprenant les séquences de blocage précédentes ; et
générer un indicateur d'interblocage si ladite ressource sélectionnée apparaît dans un desdits éléments de données (304) associé auxdites ressources préalablement demandées et non accordées.

2. Procédé selon la revendication 1, dans lequel lesdites demandes d'accès comprennent une demande de blocage d'une ressource et lesdites ressources préalablement demandées et non accordées comprennent les ressources actuellement bloquées.

3. Procédé selon l'une quelconque des revendications précédentes, comprenant en outre une étape d'enregistrement de ladite ressource sélectionnée dans ladite pile ou liste (306).

4. Procédé selon l'une quelconque des revendications précédentes, dans lequel ladite demande d'accès à ladite ressource sélectionnée est générée par un fil dudit programme informatique et lesdites ressources préalablement demandées et non accordées comprennent les ressources demandées par ledit fil et non accordées avant ladite demande de ladite ressource sélectionnée.

5. Procédé selon la revendication 4, dans lequel au moins un desdits éléments de données (304) comprend une séquence de demande, ladite séquence de demande comprenant les ressources demandées par un fil précédent dudit programme informatique et dans lequel ladite étape de génération comprend la génération dudit indicateur d'interblocage potentiel si lesdites ressources demandées par ledit fil précédent comprennent ladite ressource sélectionnée.

6. Procédé selon l'une quelconque des revendications précédentes, dans lequel chacune desdites ressources (302) incorpore ledit élément de données associé (304).

7. Système informatique de détection d'un interblocage potentiel dans un programme informatique multifil s'exécutant sur ledit système informatique, ledit système informatique comprenant une pluralité de ressources (302), dans lequel ledit programme informatique comprend une pluralité de demandes d'accès à une ou plusieurs desdites ressources (302), le système informatique comprenant :
une pile ou liste (306) de ressources préalablement demandées et non accordées ;
un moyen pour recevoir une desdites demandes d'accès à une ressource sélectionnée ;
un moyen pour lire ladite pile ou liste (306) ;
un moyen pour enregistrer ladite pile ou liste (306) de ressources préalablement demandées et non accordées en tant que séquence de blocage dans un élément de données (304) associé à ladite ressource sélectionnée ;
un moyen pour lire les éléments de données (304) associés auxdites ressources préalablement demandées et non accordées, lesdits éléments de données (304) comprenant les séquences de blocage précédentes ; et
un moyen pour générer un indicateur d'interblocage si ladite ressource sélectionnée apparaît dans un desdits éléments de données associé auxdites ressources préalablement demandées et non accordées.

8. Système informatique selon la revendication 7, dans lequel lesdites demandes d'accès comprennent une demande de blocage d'une ressource et lesdites ressources préalablement demandées et non accordées comprennent les ressources actuellement bloquées.

9. Système informatique selon la revendication 8, dans lequel ledit moyen pour enregistrer comprend en outre un moyen pour enregistrer ladite ressource sélectionnée dans ladite pile ou liste (306).

10. Système informatique selon l'une quelconque des revendications 7 à 9, dans lequel ladite demande d'accès à ladite ressource sélectionnée est générée par un fil dudit programme informatique et lesdites ressources préalablement demandées et non accordées comprennent les ressources demandées par ledit fil et non accordées avant ladite demande de ladite ressource sélectionnée.

11. Système informatique selon la revendication 10, dans lequel au moins un desdits éléments de données (304) comprend une séquence de demande, ladite séquence de demande comprenant les ressources demandées par un fil précédent dudit programme informatique et dans lequel ledit moyen de génération comprend un moyen pour générer ledit indicateur d'interblocage potentiel si lesdites ressources demandées par ledit fil précédent comprend ladite ressource sélectionnée.

12. Système informatique selon l'une quelconque des revendications 7 à 11, dans lequel chacune desdites ressources incorpore ledit élément de données associé (304).

13. Produit de logiciel informatique comprenant un support lisible par ordinateur contenant un moyen de codage exécutable par ordinateur pour détecter des interblocages potentiels dans un programme informatique multifil pendant l'exécution dudit programme informatique sur le système informatique selon l'une quelconque des revendications 7 à 12, ledit moyen de codage pouvant être exécuté pour mettre en oeuvre le procédé selon l'une quelconque des revendications 1 à 6.
